# EUROPEAN PATENT SPECIFICATION

(11) **EP 1 617 615 B1**
(45) Date of publication and mention of the grant of the patent: **26.09.2007**
(21) Application number: 04016513.6
(22) Date of filing: 14.07.2004
(51) Int. Cl.: H04L 29/06, A63F 13/12, G09B 9/02, G09B 9/30, A63F 13/10, H04L 29/08

(54) **Share-memory networked motion simulation system**
Vernetztes Bewegungssimulationssystem mit geteiltem Speicher
Système de simulation de mouvement en réseau avec partage de mémoire

(43) Date of publication of application: 18.01.2006
(73) Proprietor: Lai, Yin-Liang, Junghe City, Taipei (TW)
(72) Inventor: Chiang, Johnson, Junghe City Taipei (TW)
(74) Representative: Viering, Jentschura & Partner

(56) References cited:
- WO-A-92/16922
- US-A- 5 816 920
- US-A- 6 155 928
- US-A1- 2004 127 288

## Description

### BACKGROUND OF THE PRESENT INVENTION

### 1. Field of the Present Invention

The present invention relates to a networked interactive simulation system, and more particularly to interactive share-memory networked motion simulators that allow supervisors to correct the game control, and viewers to watch the simulation game.

### 2. Description of Prior Art

Computerized arcade games, which simulate the operation of vehicles, such as cars, and aircrafts, for training and entertainment, have been widespread. Due to advances in network technologies, the games have becoming increasingly sophisticated that is enabled to simulate a plurality of vehicles controlled by different attendees. The car racing may be a scenario for multiple attendees to participate. Each of the attendees sits in an individual simulator cabin and sees a display that depicts the virtual environment that contains the run tacks and all other vehicles. Each attendee controls an individual vehicle within the virtual environment through the game controller provided around the seat. Different vehicles interact with one another through given physical principles. The interaction of the game may be collision of the cars, collision between car and fences or trees. The network is used to transfer the data that is used to fulfill the requirement of game immersing and realism.

Examples of prior arts multiple-player simulator system include the patent WO 92/16922 entitled "vehicle simulator including cross-network feedback" disclosed a vehicle simulator has tandem surfaces for providing first and second users, which drive respective first and second simulator vehicles through simulated space. Each user sits in front of a video monitor and each video monitor are electrically connected to a respective computer. Each computer of a simulated space stored in the electronic memory of the computer, and the computer are linked through a common RAM. The computer of the users being accesses the common RAM each game cycle to determine whether a shot has been fired, and if a shot has been fired, computes whether the shot has hit the associated vehicles. Patent WO 93/16776 entitled "virtual image Entertainment" disclosed a real-time, interactive, motion-based, simulator entertainment system that employs a computer generated video game that interact with the motion-based, operator-controlled control station or simulator. A plurality of (typically two) participants interacts with the selective and timed video scenarios to achieve and objective. Interaction is achieved using the control yokes and button. Prior art multi-player simulation systems are hardware-wired for particular teamwork experience. Although it is relatively easy to reconfigure a racing simulator to simulate different tracks, such simulator cannot be reconfigured to simulator one-on-one fighting scenario involving motored vehicles crashing each other.

Prior arts include also WO 94/19783 entitled "The System and Method for Providing a Simulation Ride and Game". This system architecture generates a boarding pass or a cartridge, which includes the ride parameters for the simulator device, which provides the motion, visuals, and the sounds of the ride the user designed. The network and modem also allows the user to interact with ride designers or game players to either jointly design a ride or compete in a game. Prior art simulation systems focus more on the roller coaster arcade game, which attributed at the variety of the track design by the user. The system will not allow competition among players through physical interactions such as the dogfight simulation involving fighter aircraft.

Prior arts include also US Patent No. 6,126,548 entitled "Multi-Player Entertainment System". The system compromising the simulators, which are coupled through host computers to network, operates as a distributed state machine. Each of the host computers maintains a state vector defining a current state of its associated simulator. Elements of the state vector that are relevant to the other simulator in the system are posted on network by each host computer asynchronously as the state of the simulator diverges from that calculated by a low resolution dead reckoning model of its behavior by more that a preset threshold. Each simulator runs such dead reckoning model for itself and all other simulators in the common virtual environment. Updates to the state parameters for each simulated platform are thus maintained either by dead reckoning process (as long as its accuracy remains within he defined thresholds of error) or by broadcast state updates that correct the dead reckoning estimates. Prior art multi-player system emphasizes on the reconfiguration of the system and the immerse mosaic visual display. It is not configured to a supervised training system, such as the automobile driver training nor it might be configured to a viewer attending system that the viewer attends only to watch the dogfight of fighters according to his/her eye-point and line of sight of selection.

Prior arts include also US Patent No. 5,816,920 entitled "Game System and Method of Entering Game System". The game system enables the entry of a new game terminal into a currently operating multiplayer game system, or the isolation of a specific game terminal from a currently operating-multiplayer game system. Each game terminal includes a master/slave setting section which detects whether or not data is being transferred over data transfer lines when that game terminal starts up, and either sets itself to be the master machine if transfer data is not present, or sets itself to be a slave machine if transfer data is already present. The game system also includes an entry acceptance signal transfer section wherein the master machine transfers an entry acceptance signal between game terminals for accepting entries into the game system.

Prior arts include also US Patent No. 6,155,928 entitled "Modular Portable Gaming Simulator Systems and Methods". The modular portable gaming simulator system includes a transport trailer with at least one movable sidewall to which two or more gaming simulation stations are attached. The movable sidewall can be selectively raised and lowered between a transport or upright position for transporting the system, and a deployed or active position for displaying and operating the gaming simulation stations The gaming simulation stations are interconnected so that the gaming simulation stations can interactively execute a software program application, such as in head-to-head competition In the deployed position, the movable sidewall forms a stage on which the gaming simulation stations rest. In order to transport the system, the sidewall is raised into the upright or transportable position for transportation. During transportation, the gaming simulation stations remain attached to the sidewall in a horizontal, sideways position.

Prior arts include also US Publication No. 2004/127288 entitled "Communication Game Equipment". The communication game is capable of implementing a system for performing real time communication multiplayer communication and real time management monitoring communication while concurrently keeping an equipment load level. The communication game equipment including a main system having a main CPU, which controls execution of games by game programs; and a communication sub-system having a sub-CPU, which executes a plurality of different communication function tasks, wherein the communication sub-system is provided with a shared memory accessible by the main CPU and the sub-CPU, the communication sub-system having a resource management task function, which manages resources of the shared memory for the plurality of different communication function tasks.

A need arises for the system and method for providing a simulation ride and game that allow supervisors to teach the game control, and viewers to watch the simulation game in any time no matter the simulation race is started or not.

### SUMMARY OF THE PRESENT INVENTION

The present invention provides a share-memory networked motion simulation system according to independent claim 1. The system has share-memory architecture that assigns different priorities to different attendees. The term "attendee" herein indicates the game participant who is equipped minimally with a computer and connected by network to the simulation system. According to the priority of the memory access authorities, attendees may read, write, and overwrite the data from the common memory shared by different memory users. Such a memory is maintained through network to yield consistent and transparent data to all users. Among the networked computers, one computer is used as the server of the entire simulation process, which controls the states as well as the sequence of the simulation game. Rest computers are called the clients. Each of the individual clients controls at most one simulator unit. Each simulator unit is preferable mounted on a motion platform to provide the attendee with the motion cue consistent with the motion in the simulation game. The "cue" herein indicates a hint or a feature indicating the nature of something perceived.

Within a simulation game, there may be an integration of movable objects comprising vehicles, missile, rocket, canon ball, falling tree and etc, the static objects comprising mountains, roads, bridges, tracks, and etc. The movable object controlled by the operators is referred to as the client-owned vehicle. The self-controlled, movable object is referred to as the server-owned movable object such as rockets. The presentation of the static object is determined by a set of data called virtual environment parameters such sun position and fog. The centralized information used to regulate the game process is referred to as the game status parameters such as the game start status, the game time count, and etc. The state parameters include location, orientation coordinates, velocities, and accelerations of objects and simulated vehicles within the virtual world.

The common memory of the simulation game consists of the minimal set of data required for the motion, visual, and sound cues for the attendees. By this means, network traffic is minimized, while at the same time, the common memory data for each simulator is available to all other simulators on the network. The attendees to the simulation game are categorized into three different classes according to their data authorization. The first class is called the supervisory class that has the highest priority to read/write the data in the common memory of the simulation process. The second class is called the driver class that has the right to read/write the data in the common memory of the simulation process, however the data that written by the driver class may be rewritten by the supervisory class. The third class is called the viewer class that has solely the right to read the data from the common memory.

The corresponding data arbitration based on the discrimination of attendee classes is achieved in the simulation game. Supervisors are enabled to correct the game control of the individual driver, and novice viewers are enabled to watch the simulation game with advanced equipment such as the simulator unit.

### BRIEF DESCRIPTION OF THE DRAWING FIGURES

Figure 1 is the system structure of the motion simulation system.
Figure 2 is the simulator unit.
Figure 3 is the sections in the common memory.
Figure 4 is the attendee queue for each of the client-owned data section.
Figure 5 is the share-memory scheme for the network communication.
Figure 6 is the block diagram of software running on the server computer and client computers.
Figure 7 is the content in data sections.

### DETAILED DESCRITION OF THE PREFERRED EMBODIMENTS

Within a simulation game, the movable objects may interact with each other by means of collision. The movable object may separate itself into two movable objects of which one is a server-owned movable object. The movable object may interact with the static object by means of collision. The static object may become a server-owned movable object due to the collision. Collision is detected by means of boundary intersection analysis referred to as the collision analysis.

Among the networked computers, one computer is used as the server of the overall simulation process, which controls the states as well as the sequence of the simulation game. Rest computers are called the clients. Each of the individual clients controls at most one simulator unit. Each simulator unit is preferable mounted on a motion platform to provide the attendee with the motion cue consistent with the motion in the simulation game. On top of the motion platform there is a cabin comprising the projector display, game controller and audio system. The projector display virtually shows the mapping of 3D world of objects onto a 2D screen according to the attendee's eye-point location and/or line of sight orientation of chosen. The attendee's eye-point location and/or line of sight orientation is typically attached to a virtual vehicle that travels within the 3D virtual world. The motion of virtual vehicles is governed by the physical laws to yield a trajectory that is similar to a real vehicle does. The motion of the virtual vehicle is carried out by a motion platform that shakes the attendee and provides the motion cue. The attendee's eye-point location and/or line of sight orientation in the virtual world is attached to the virtual vehicle and the projected image according to the viewpoint is displayed on the screen. The eye-point and/or line of sight orientation changed with the navigation of the vehicle yields a series of 2D image projection called the visual cue to the attendee. The audio system with a set of 2 to 6 speakers each of the speaker generates different sounds simulating the sound sources in the virtual world. The audio system is designed to perform the sound cue to the attendee that allows the attendee to judge the location as well as the approaching/leaving speed of the object in the virtual world.

Attendees are categorized into three different classes according to their data authorization. The first class is called the supervisory class that has the highest priority to read/write the data in the common memory of the simulation process. The second class is called the driver class that has the right to read/write the data in the common memory of the simulation process, however the data that written by the driver class may be rewritten by the supervisory class. The third class is called the viewer class that has solely the right to read the data from the common memory.

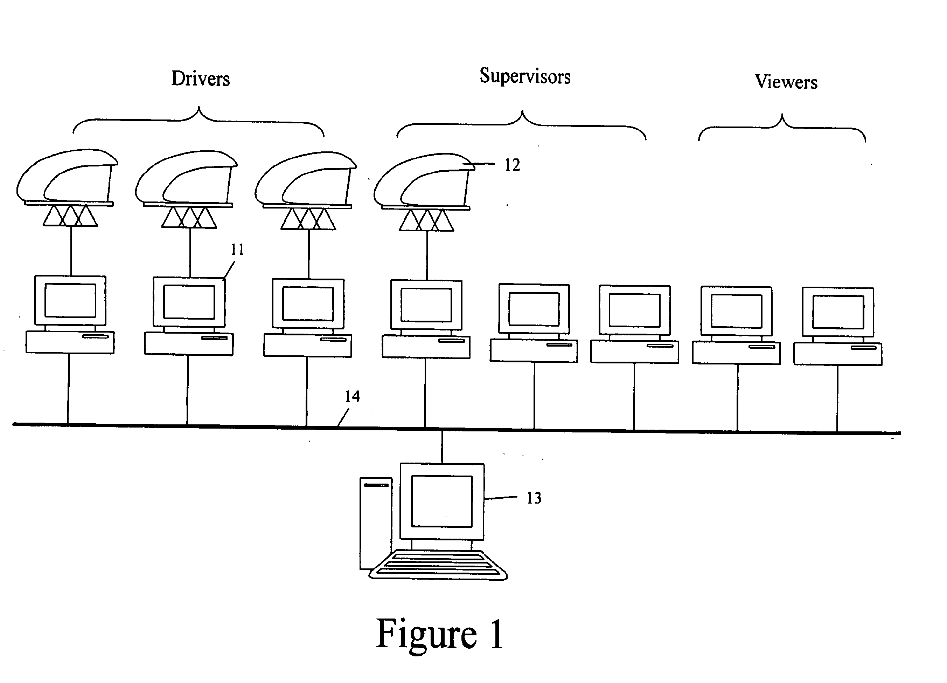

Figure 1 shows a system structure of the motion simulation system. In the motion simulation system, there are three classes of attendees; the driver class is typically equipped with one client computer 11 and one simulator unit 12; the supervisor class is typically equipped with one client computer 11 and preferable be equipped with the simulator unit 12; the viewer class is typically equipped with the client computer 11 only. All client computers are connected to a server computer 13 through network cable 14, preferable to be the Ethernet.

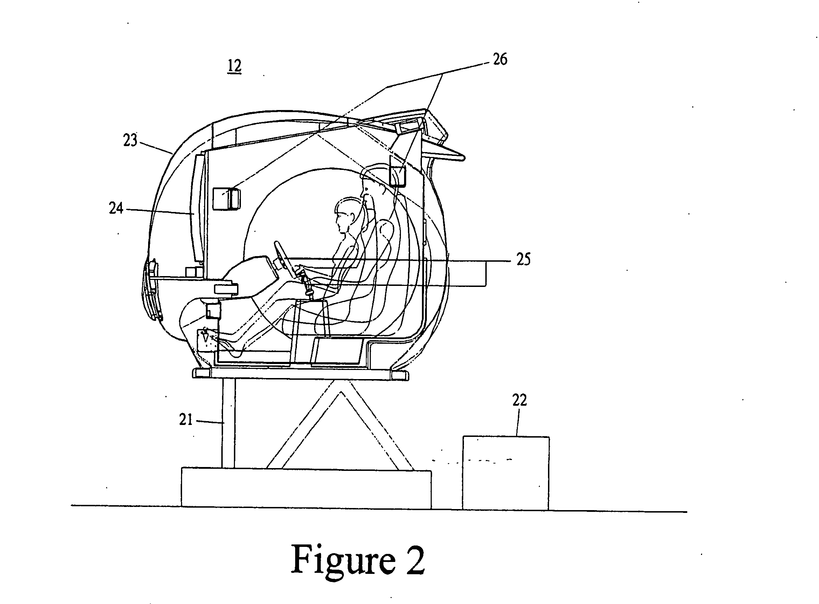

Figure 2 depicts the simulator unit 12. Each simulator unit 12 comprises a motion platform 21, an electrical control box 22, a cabin 23 accommodating at least one user, a projector display 24, a game controller 25, and an audio system with speakers 26.

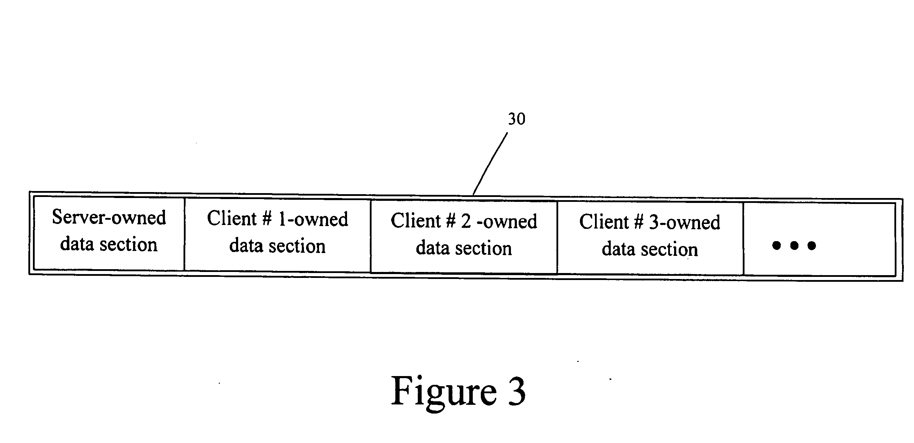

Figure 3 shows the contents in a common memory 30. The memory is divided into a plurality of sections, including the server-owned data section and client-owned data sections. The common memory is preferable to be of minimal size to expedite the data transfer rate. In a particular embodiment of the invention, the common memory consists of a server-owned data section of size of thirty-two DWORD (32 bits). Each of the client-owned section consists of thirty-two DWORD (32 bits).

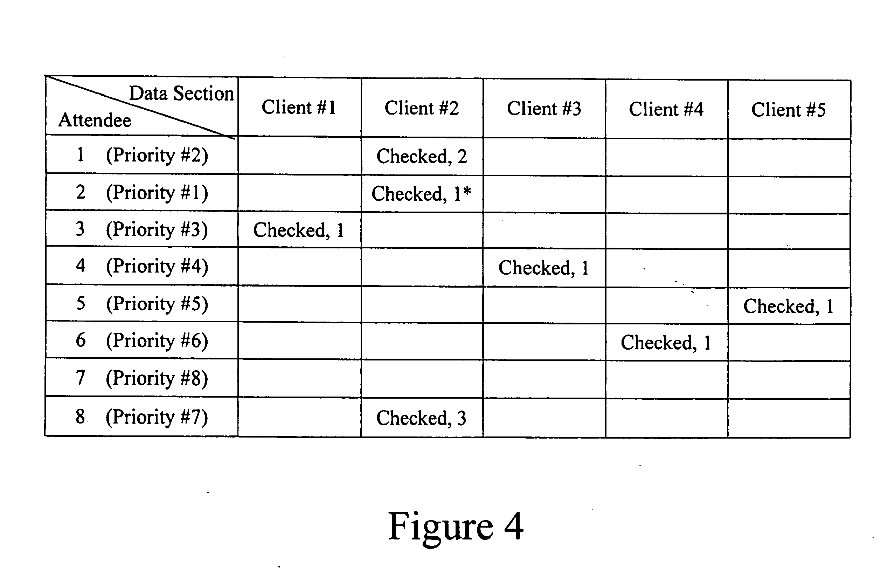

The authority of the data access in the common memory is regulated by the priority. There is only one user allowed to write the data within the waiting queue of users. Rest of users who are with the lower priority can only read the data when waiting the user with highest priority to leave the queue. Each of the client-owned data is associated with one vehicle presented in the virtual environment if any one attendee currently controls this client-owned data section. The term "controlled" is practically implemented by data "write" authority. The attendee will check at most one client-owned data section to obtain the authority control. There may be more than one attendee who wants to control the same client-owned data section. Attendees are waiting in the queue for authority to control. Figure 4 demonstrates one example of the particular embodiment of the user-queue of the client-owned data section. In the example there are eight attendees; each one is with an assigned priority in the simulation system. Attendee #1, Attendee #2 and Attendee #8 are checked on the same data section. Since Attendee #2 has the highest priority, he is assigned to control the vehicle associated with this data section; in other words, he is allowed to write the data into this data section when rest attendees are waiting in the queue for the authority to control. In case of Attendee #2 left, Attendee #1 may take place immediately to control the vehicle associated with client #2 data section. In case that Attendee #2 comes into the queue again to obtain the control authority, Attendee #1 will be re-assigned to wait for the authority in the queue. By means that the authority of the client-owned data section is shifted alternatively from one user to the other, the supervisory control is realized. In this particular embodiment, there are three classes of attendees in client #2 data section, Attendee #2 takes a part of supervisor of Attendee #1 for Attendee #1 has higher priority to intervene the control conducted by Attendee #1 who has lower priority. Attendee #8 takes a part of the viewer who sits on the back seats of the vehicle to observe the vehicle running (or navigating). Attendee #3, #4, #5, and #6 are controlling individually a vehicle in the virtual environment. Attendee #7 checks no client-owned data section; he is a free viewer to select his static line-of-sight and eye-point in the virtual environment.

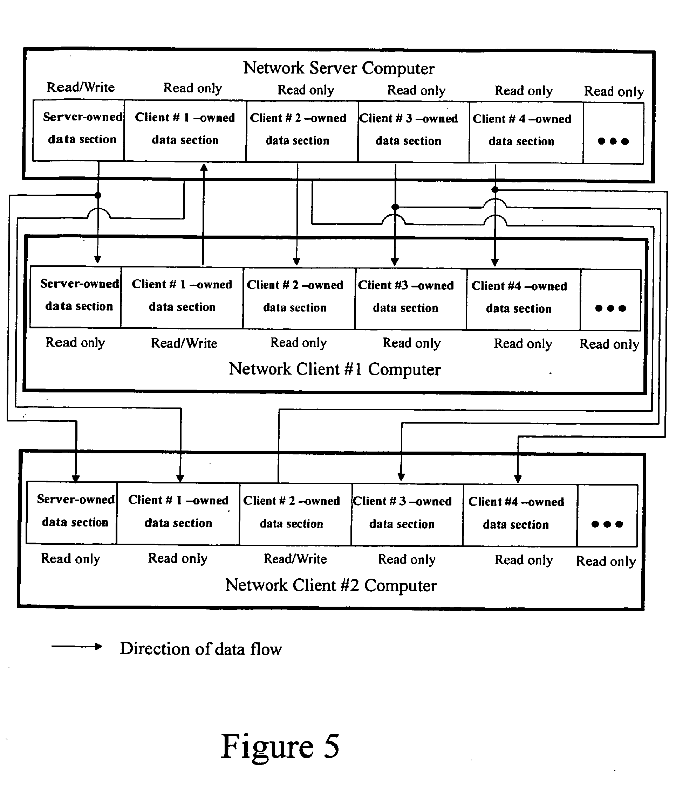

Figure 5 depicts the share-memory scheme for the network communication. In a particular embodiment of the invention, the common memory of each individual computer is updated once every thirty milli-seconds (30x10-3sec). The server computer 13 writes the data to the server-owned section in the common memory according to the game status parameters. The server computer 13 is also responsible to maintain the data consistency among the common memory on each of the client computer 11 and the server computer 13 by means of uploading the server-owned data to the client computer 11 and downloading client-owned data from the client computer 11.

In a particular embodiment of the invention, the client is connected to the server by the User Datagram Protocol (UDP) which is a connectionless protocol. To transmit data using UDP, the client computer first set the client computer's local port property. The server computer then needs only set the Remote Host to the Internet address of the client computer, and Remote port property the same port as the client computer's Local Port property, and invoke the SendData method to begin sending messages. The Client computer then uses the GetData method with the DataArrival event to retrieve the sent messages. There may be a list of server computers that a client computer can join to. In order to find an active server, the UDP may be used for the server search purpose. In case that none of the server is the list is active then the client computer may become itself the server computer. After a server is found, the successive Transfer Control Protocol (TCP) may be built between the client computer and the found server computer. TCP will create and maintain a connection between remote computers. Using this connection, both computers can stream data between themselves. In the server computer, a port is set to listen, and invoke the Listen method. When the client computer requests a connection, the ClientRequest event will occur. To complete the connection, invoke the Accept method within the Connection Request event.

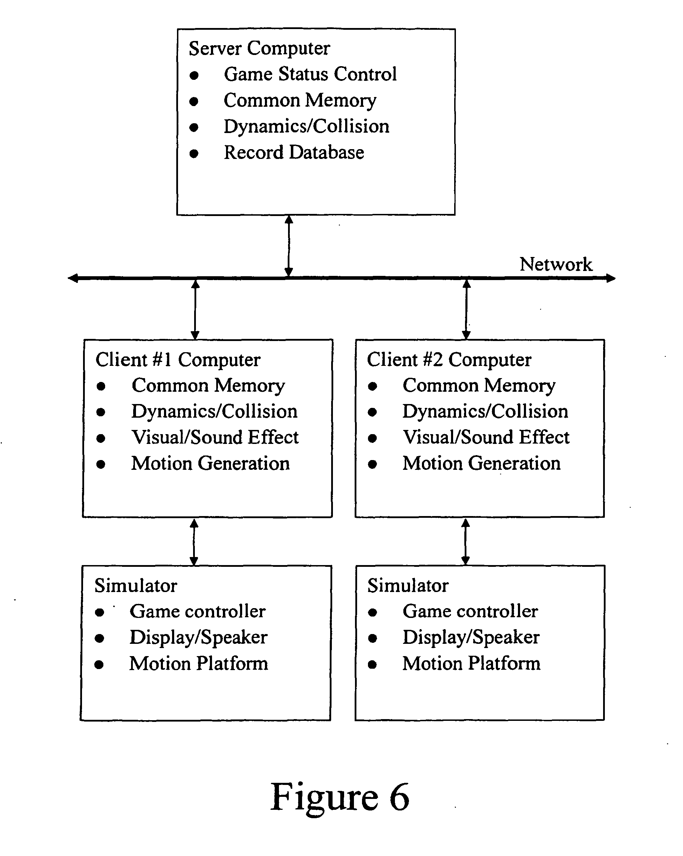

Figure 6 shows the block diagram of software running on the server computer and client computers. The client computer 11 uploads the vehicle type parameters, the vehicle state parameters, the vehicle sound/visual parameters, and the vehicle collision parameters to server computer and writes to the client-owned section of the common memory. The client computer will then download the entire common memory data from server computer. At the same time, the client computer obtains game input data from the game controller. In a particular embodiment, the sampling rate is one tenth of a second. According to the game input data and downloaded data of the common memory the client computer performs dynamic analysis of the client-owned virtual vehicle. The client computer will also perform collision analysis the client-owned virtual vehicle against the other client-owned virtual vehicles and server-owned movable objects according to the game input data and downloaded common memory data. According to the result from the dynamics and collision analysis and the data of common memory the client computer performs visual and sound effect. According to the visual and sound effect the client computer controls the display and audio system. According to the dynamics and collision data along with the motion cue laws the client computer performs the motion generation. The client computer will then control the motion platform according to the motion generation data. The server computer 13 controls the game status parameters according to the predetermined game rules and the common memory data and writes the game status parameters, virtual environment parameters, to the server-owned section in the common memory according to the game status parameters. The most important role of the server computer in the simulation process is to maintain the data consistency in the common memory. The server computer will generate server-owned movable objects according to the common memory data. The server computer performs also the dynamics and collision analysis of server-owned movable objects. The server computer writes state parameters and collision parameters of server-owned movable objects and to the server-owned section in the common memory. The server computer may comprise further multi-processes and multi-threads, each emulates the client function aforementioned.

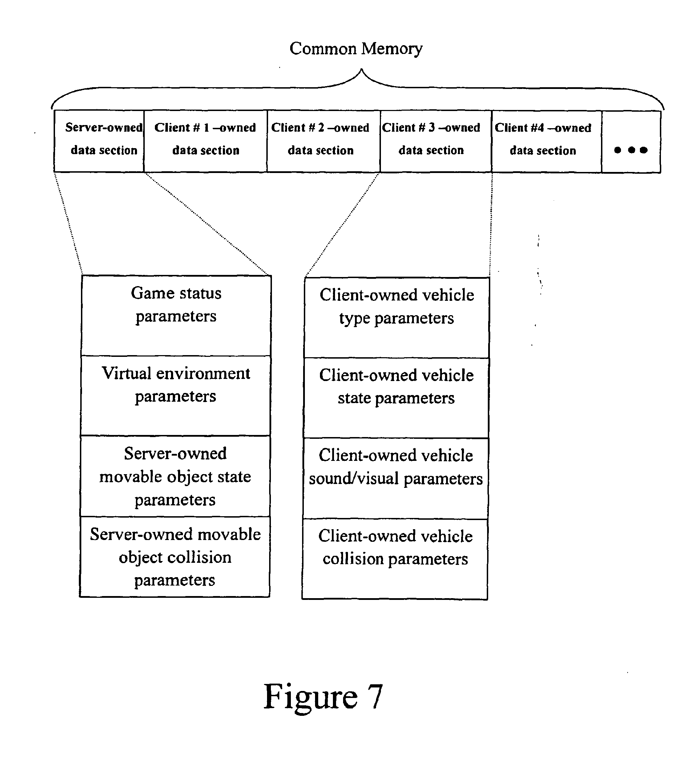

Figure 7 depicts the content in data sections. In a particular embodiment of the invention, the content in the server memory may consist of game status parameters, virtual environment parameters, the state parameters of the server-owned movable objects, and the collision parameters of the server-owned movable objects. The content in the client memory may consist of the vehicle type parameters, the state parameters associated with this client-owned data section, the sound and visual parameters of the vehicle, and the collision parameters of the vehicle. The state parameters of the vehicle may consist of position, velocity and acceleration of the vehicle. The collision parameters of the vehicle may consist of the ID of the car that is currently engaged with and the velocity that the collided car should change into. The sound parameters may include the type of sound that the vehicle associated with this client-owed data section presents, such as explosion and the engine sound. The visual parameters may include whether the headlight of the vehicle has been on.

The present invention provides a share-memory networked motion simulation system. The system has share-memory architecture that assigns different priorities to different attendees. The term "attendee" herein indicates the game participant who is equipped minimally with a computer and connected by network to the simulation system. According to the priority of the memory access authorities, attendees may read, write, and overwrite the data from the common memory shared by different memory users. Such a memory is maintained through network to yield consistent and transparent data to all users. Among the networked computers, one computer is used as the server of the entire simulation process, which controls the states as well as the sequence of the simulation game. Rest computers are called the clients. Each of the individual clients controls at most one simulator unit. Each simulator unit is preferable mounted on a motion platform to provide the attendee with the motion cue consistent with the motion in the simulation game. The "cue" herein indicates a hint or a feature indicating the nature of something perceived.

As noted above, the present invention provides a share-memory networked motion simulation system. The system has share-memory architecture that assigns different priorities to different attendees. According to the priority of the memory access authorities, attendees may read, write, and overwrite the data from the common memory shared by different memory users. Such a memory is maintained through network to yield consistent and transparent data to all users. The system and method provides a simulation ride and game that allow supervisors to teach drivers the game control and viewers to watch the simulation game. This system yields multiple purposes including entertainment and training to attendees.

## Claims

1. A share-memory networked motion simulation system comprising:
a server computer (13), having a common memory that contains a set of data required for the simulation process;
a plurality of simulator units (12), each simulator unit (12) comprising a motion platform (21), an electrical control box (22), a cabin (23) accommodating at least one user, a projector display (24), a game controller (25), and a speaker (26);
a plurality of client computers (11), each having a common memory and associated with a respective one of the plurality of simulator units (12);
a communications network (14) coupled to the server computer (13) and each client computer;
**such that** the common memory of either the server computer (13) or the client computers (11) is divided into a plurality of sections including a server-owned section to provide the server computer (13) with the ability to write server-owned data in the common memory and a plurality of client-owned sections, each associated with client-owned data of a respective client computers (11); wherein the server computer (13) is adapted to maintain the data consistency among the common memory on each of the client computers (11) and the server computer (13) by means of uploading the server-owned data to the client computers (11) and downloading the client-owned data from the client computers (11); the authority of the data access in the common memory being regulated by priority, attendees to the simulation system are categorized into three different classes according to their data authorization, including the first class called the supervisory class that has the highest priority to read/write the data in the common memory, the second class called the driver class that has the right to read/write the data in the common memory and the data written by the driver class may be rewritten by the supervisory class and the third class called the viewer class that has solely the right to read the data from the common memory.

2. The share-memory networked motion simulation system of claim 1, the server-owned data written in the server-owned section of the common memory comprising game status parameters, virtual environment parameters, state parameters of server-owned movable objects, and collision parameters of the server-owned movable objects; and the client-owned data in the client-owned section of the common memory comprising vehicle type parameters, vehicle state parameters associated with this client-owned data section, sound and visual parameters of a vehicle, and collision parameters of the vehicle,
with each client computer (11) having means for:
uploading vehicle type parameters, vehicle state parameters, vehicle sound/visual parameters, and vehicle collision parameters to the server computer (13) and overwriting the client-owned section of the common memory;
downloading the entire common memory data from the server computer (13); obtaining game input data from the game controller (25);
performing dynamic analysis of the client-owned virtual vehicle according to the game input data, and downloading common memory data;
performing collision analysis of the client-owned virtual vehicle against the other client-owned virtual vehicles and the server-owned movable objects according to the game input data and downloading common memory data;
performing visual and sound effect according to the result from the dynamics and collision analysis and the common memory data;
controlling the display (24) and speaker (26) according to the visual and sound effect; performing the motion generation; and
controlling the motion platform (21) according to the motion generation data; and the server computer (13) having means for:
controlling the game status parameters according to the predetermined game rules and the data in the common memory:
writing the game status parameters and virtual environment parameters to the server-owned section in the common memory according to the game status parameters ; generating server-owned movable objects according to the common memory data; performing the dynamics and collision analysis of server-owned movable objects; and
writing state parameters and collision parameters of server-owned movable objects to the server-owned section in the common memory.

3. The share-memory networked motion simulation system of claim 2, the server computer further comprising a database for recording historical data of the game.

## Patentansprüche

1. Vernetztes Bewegungssimulationssystem mit geteiltem Speicher, umfassend
einen Servercomputer (13) mit einem gemeinsamen Speicher, der einen Satz von für das Simulationsverfahren erforderlicher Daten enthält,
mehrere Simulatoreinheiten (12), wobei jede Simulatoreinheit (12) eine Bewegungsplattform (21), eine elektrische Steuereinheit (22), eine Kabine (23), die mindestens einen Benutzer, eine Projektionsanzeige (24), eine Spielsteuerung (25) und einen Lautsprecher (26) aufnimmt,
mehrere Kundencomputer (11), von denen jeder einen gemeinsamen Speicher aufweist und einer entsprechenden der mehreren Simulatoreinheiten (12) zugeordnet ist,
ein Kommunikationsnetzwerk (14), das mit dem Servercomputer (13) und jedem Kundencomputer (11) so verbunden ist, dass der gemeinsame Speicher entweder des Servercomputers (13) oder der Kundencomputer (11) in mehrere Abschnitte mit einem servereigenen Abschnitt, um mit dem Servercomputer (13) servereigene Daten in den gemeinsamen Speicher zu schreiben, und mit mehreren kundeneigenen Abschnitten, die jeweils den kundeneigenen Daten jedes entsprechenden Kundencomputers (11) zugeordnet sind, unterteilt ist, wobei der Servercomputer (13) die Datenübereinstimmung zwischen dem gemeinsamen Speicher jedes Kundencomputers (11) und dem Servercomputer (13) mittels Aufladen der servereigenen Daten auf die Kundencomputer (11) und Herunterladen der kundeneigenen Daten von den Kundencomputern (11) aufrecht erhält, wobei die Autorität des Datenzugriffs zu dem gemeinsamen Speicher durch die Priorität geregelt wird, und die Teilnehmer an dem Simulationssystem entsprechend ihrer Datenautorität in drei unterschiedliche Kategorien unterteilt sind, einschließlich der ersten Klasse, die als Überwachungsklasse bezeichnet wird, die die höchste Priorität zum Lesen/Schreiben der Daten aus/in dem/den gemeinsamen Speicher besitzt, der zweiten Klasse, die als Fahrerklasse bezeichnet wird, die das Recht zum Lesen/Schreiben der Daten aus/in dem/den gemeinsamen Speicher hat, wobei die von der Fahrerklasse geschriebenen Daten von der Überwachungsklasse überschrieben werden können, und der dritten Klasse, die als Zuschauerklasse bezeichnet wird, die nur das Recht zum Lesen der Daten aus dem gemeinsamen Speicher hat.

2. Vernetztes Bewegungssimulationssystem mit geteiltem Speicher nach Anspruch 1, wobei die in den servereigenen Abschnitt des gemeinsamen Speichers geschriebenen servereigenen Daten Spielstatusparameter, virtuelle Umgebungsparameter, Zustandsparameter der servereigenen bewegbaren Objekte und Kollisionsparameter der servereigenen bewegbaren Objekte und die kundeneigenen Daten in dem kundeneigenen Abschnitt des gemeinsamen Speichers Fahrzeugtypenparameter, dem kundeneigenen Abschnitt zugeordnete Fahrzeugzustandsparameter, Geräuschs- und Sichtparameter eines Fahrzeugs und Kollisionsparameter des Fahrzeugs umfassen, wobei jeder Kundencomputer (11) Einrichtungen,
zum Heraufladen von Fahrzeugtypparametern, von Fahrzeugszustandsparametern, von Fahrzeuggeräuschs/Sichtparametern und Fahrzeugkollisionsparametern auf den Servercomputer (13) und
zum Überschreiben des kundeneigenen Abschnitts des gemeinsamen Speichers,
zum Herunterladen der gesamten Daten des gemeinsamen Speichers von dem Servercomputer (13),
zum Erhalt von Spieleingabedaten von der Spielsteuerung (25),
zur Durchführung einer dynamischen Analyse des kundeneigenen virtuellen Fahrzeugs entsprechend der Spieleingabedaten und zum Herunterladen der Daten des gemeinsamen Speichers,
zur Durchführung einer Kollisionsanalyse des kundeneigenen virtuellen Fahrzeugs gegen die anderen kundeneigenen Fahrzeuge und die servereigenen bewegbaren Objekte entsprechend den Spieleingabedaten und den heruntergeladenen Daten des gemeinsamen Speichers,
zur Durchführung von visuellen und Geräuschseffekten entsprechend dem Ergebnis der dynamischen und der Kollisionsanalyse und den Daten des gemeinsamen Speichers,
zur Steuerung der Anzeige (24) und des Lautsprechers (26) entsprechend den visuellen und Geräuschseffekten zur Durchführung der Bewegungserzeugung, und
zur Steuerung der Bewegungsplattform (21) entsprechend den Bewegungserzeugungsdaten aufweist, und der Servercomputer (13) Einrichtungen
zur Steuerung der Spielstatusparameter entsprechend bestimmten Spielregeln und den Daten des gemeinsamen Speichers,
zum Schreiben der Spielstatusparameter und der virtuellen Umgebungsparameter in den servereigenen Abschnitt und dem gemeinsamen Speicher entsprechend den Spielstatusparametern,
zum Erzeugen servereigener bewegbarer Objekte entsprechend den Daten des gemeinsamen Speichers,
zum Durchführen der dynamischen und der Kollisionsanalyse der servereigenen bewegbaren Objekte, und zum Schreiben der Statusparameter und der Kollisionsparameter der servereigenen bewegbaren Objekte in den servereigenen Abschnitt im gemeinsamen Speicher.

3. Vernetztes Bewegungssimulationssystem mit geteilten Speichern nach Anspruch 2, wobei der Servercomputer weiter eine Datenbasis zur Aufzeichnung historischer Daten des Spiels aufweist.

## Revendications

1. Système à simulation de mouvement en réseau à mémoire partagée comprenant :
un ordinateur serveur (13) ayant une mémoire commune qui contient un ensemble de données requis pour le processus de simulation ;
une pluralité d'unités de simulateur (12), chaque unité de simulateur (12) comprenant une plate-forme de mouvement (21), une boîte de commande électrique (22), une cabine (23) logeant au moins un utilisateur, un écran de projecteur (24), une carte de commande de jeux (25) et un haut-parleur (26) ;
une pluralité d'ordinateurs clients (11), chacun ayant une mémoire commune et étant associé à l'une des unités respectives de la pluralité d'unités de simulateur (12) ;
un réseau de télécommunication (14) couplé à l'ordinateur serveur (13) et à chaque ordinateur client ;
de sorte que la mémoire commune de l'un ou l'autre parmi l'ordinateur serveur (13) ou les ordinateurs clients (11) soit divisée en une pluralité de sections comprenant une section détenue par le serveur afin de fournir à l'ordinateur serveur (13) la capacité d'écrire des données détenues par le serveur dans la mémoire commune et une pluralité de sections détenues par le client, chacune étant associée à des données détenues par le client d'un ordinateur client respectif (11) ; dans lequel l'ordinateur serveur (13) est adapté pour maintenir la cohérence des données au sein de la mémoire commune sur chacun des ordinateurs clients (11) et de l'ordinateur serveur (13) au moyen d'un téléchargement vers l'amont des données détenues par le serveur vers les ordinateurs clients (11) et d'un téléchargement vers l'aval des données détenues par le client à partir des ordinateurs clients (11) ; l'autorisation d'accès aux données dans la mémoire commune étant régulée par priorité, les personnes présentes sur le système de simulation sont catégorisées dans trois classes différentes en fonction de leur autorisation d'accès aux données, comprenant la première classe appelée la classe de supervision qui a la priorité la plus élevée pour lire/écrire les données dans la mémoire commune, la deuxième classe appelée classe pilote qui a le droit de lire/écrire les données dans la mémoire commune et les données écrites par la classe pilote peuvent être réécrites par la classe de supervision, et la troisième classe appelée classe de visualisation qui a uniquement le droit de lire les données à partir de la mémoire commune.

2. Système à simulation de mouvement en réseau à mémoire partagée selon la revendication 1, les données détenues par le serveur écrites dans la section détenue par le serveur de la mémoire commune comprenant des paramètres d'état de jeux, des paramètres d'environnement virtuel, des paramètres d'état d'objets mobiles détenus par le serveur, et des paramètres de collision des objets mobiles détenus par le serveur ; et les données détenues par le client dans la section détenue par le client de la mémoire commune comprenant des paramètres de type de véhicule, des paramètres d'état du véhicule associés à cette section de données détenues par le client, des paramètres sonores et visuels d'un véhicule, et des paramètres de collision du véhicule,
chaque ordinateur client (11) ayant des moyens pour :
télécharger vers l'amont les paramètres de type de véhicule, les paramètres d'état du véhicule, les paramètres sonores/visuels du véhicule et les paramètres de collision du véhicule vers l'ordinateur serveur (13) et écraser la section détenue par le client de la mémoire commune ;
télécharger vers l'aval la totalité des données de la mémoire commune à partir de l'ordinateur serveur (13) ;
obtenir des données d'entrée de jeux à partir de la carte de commande de jeux (25) ;
effectuer une analyse dynamique du véhicule virtuel détenu par le client en fonction des données d'entrée de jeux et télécharger vers l'aval les données de la mémoire commune ;
effectuer une analyse de collision du véhicule virtuel détenu par le client par rapport aux véhicules virtuels détenus par les autres clients et aux objets mobiles détenus par le serveur en fonction des données d'entrée de jeux et télécharger vers l'aval les données de la mémoire commune ;
effectuer un effet visuel et sonore en fonction du résultat des analyses dynamiques et de collision et des données de la mémoire commune ;
contrôler l'écran (24) et le haut-parleur (26) en fonction de l'effet visuel et sonore ;
effectuer la génération de mouvement ; et
contrôler la plate-forme de mouvement (21) en fonction des données de génération de mouvement ;
et l'ordinateur serveur (13) ayant des moyens pour :
contrôler les paramètres d'état de jeux en fonction des règles de jeux prédéterminées et des données de la mémoire commune ;
écrire les paramètres d'état de jeux et les paramètres d'environnement virtuel dans la section détenue par le serveur dans la mémoire commune en fonction des paramètres d'état de jeux ;
générer des objets mobiles détenus par le serveur en fonction des données de la mémoire commune ;
effectuer les analyses dynamiques et de collision des objets mobiles détenus par le serveur ; et
écrire les paramètres d'état et les paramètres de collision des objets mobiles détenus par le serveur dans la section détenue par le serveur dans la mémoire commune.

3. Système à simulation de mouvement en réseau à mémoire partagée selon la revendication 2, l'ordinateur serveur comprenant en outre une base de données destinée à enregistrer les données historiques du jeu.
